(19) Europäisches Patentamt
European Patent Office
Office européen des brevets

(11) **EP 4 428 565 A1**

(12) **EUROPEAN PATENT APPLICATION**

(43) Date of publication:
**11.09.2024 Bulletin 2024/37**

(21) Application number: **23161002.3**

(22) Date of filing: **09.03.2023**

(51) International Patent Classification (IPC):
***G01S 7/35*** *(2006.01)*     ***G01S 13/34*** *(2006.01)*
***G01S 13/44*** *(2006.01)*     ***G01S 13/58*** *(2006.01)*

(52) Cooperative Patent Classification (CPC):
**G01S 13/343; G01S 7/354; G01S 13/4454;**
**G01S 13/584**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicant: **Infineon Technologies AG**
**85579 Neubiberg (DE)**

(72) Inventors:
• **GOVINDA KAMMATH, Abhilash**
**85579 München (DE)**
• **JUNGMAIER, Reinhard-Wolfgang**
**4072 Alkoven (AT)**

(74) Representative: **2SPL Patentanwälte PartG mbB**
**Landaubogen 3**
**81373 München (DE)**

Remarks:
Amended claims in accordance with Rule 137(2) EPC.

(54) **APPARATUS, RADAR SYSTEM, ELECTRONIC DEVICE AND METHOD**

(57)     An apparatus is provided comprising processing circuitry configured to determine a covariance of a plurality of chirps measured by a radar sensor and determine at least one of a motion and a presence of an object within a field of view of the radar sensor based on the determined covariance.

Fig. 4c

**Description**

**Field**

The present disclosure relates to radar data processing. In particular, examples relate to an apparatus, a radar system, an electronic device, and a computer-implemented method.

**Background**

Radar data processing is an important component of radar systems, providing the ability to extract meaningful information from radar signals. Conventionally, the processing of radar data has been computationally intensive, especially when using Fourier transform techniques. This high computational complexity has limited the ability to implement radar data processing in low power applications, where limited computational resources and power constraints are a major concern. Additionally, the large memory requirements of Fourier transform algorithms can also be a challenge in low power applications, where memory resources are often limited. Despite the challenges posed by the computational complexity of radar data processing, there has been a growing need for efficient and effective processing of radar signals while maintaining or improving its accuracy and performance. Hence, there may be a demand for improved radar data processing.

**Summary**

The demand is satisfied by the subject matter of the independent claims. Further beneficial embodiments are given by the dependent claims.

Some aspects of the present disclosure relate to an apparatus comprising processing circuitry configured to determine a covariance of a plurality of chirps measured by a radar sensor and determine at least one of a motion and a presence of an object within a field of view of the radar sensor based on the determined covariance.

Some aspects of the present disclosure relate to a radar system comprising the above apparatus and the radar sensor. The radar sensor is configured to emit a radio frequency signal into the field of view and measure the plurality of chirps based on a received reflection of the radio frequency signal.

Some aspects of the present disclosure relate to an electronic device comprising the above radar system. The electronic circuitry further comprises control circuitry configured to control an operation of the electronic device based on the determined at least one of the motion and the presence of the object.

Some aspects of the present disclosure relate to a computer-implemented method comprising determining a covariance of a plurality of chirps measured by a radar sensor, and determining at least one of a motion and a presence of an object within a field of view of the radar sensor based on the determined covariance.

**Brief description of the Figures**

Some examples of apparatuses and/or methods will be described in the following by way of example only, and with reference to the accompanying figures, in which

Fig. 1 illustrates an example of an apparatus;

Figs. 2a and 2b illustrate examples of a modulation scheme with and without averaging, respectively;

Figs. 3a and 3b illustrate examples of a range representation of selected four and three chirps, respectively;

Figs. 4a to 4d illustrate examples of a range representation of four chirps and an example of a sliding window;

Figs. 5 to 11 illustrate examples of time diagrams of an output of an apparatus as described herein;

Fig. 12 illustrates an example of a radar system;

Fig. 13 illustrates an example of an electronic device; and

Fig. 14 illustrates an example of a method.

## Detailed Description

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an "or", this is to be understood as disclosing all possible combinations, i.e., only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

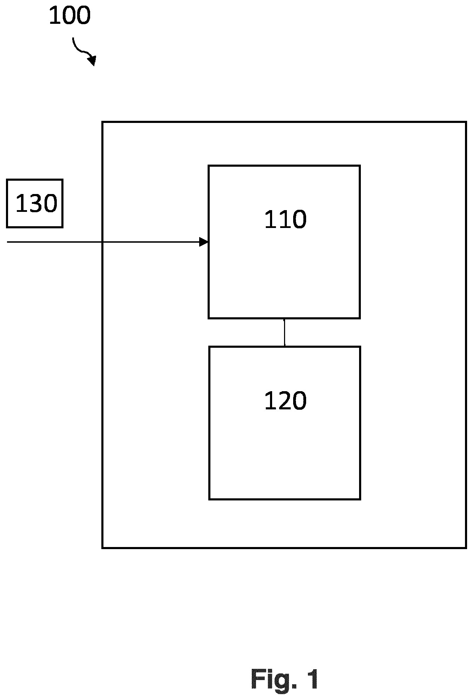

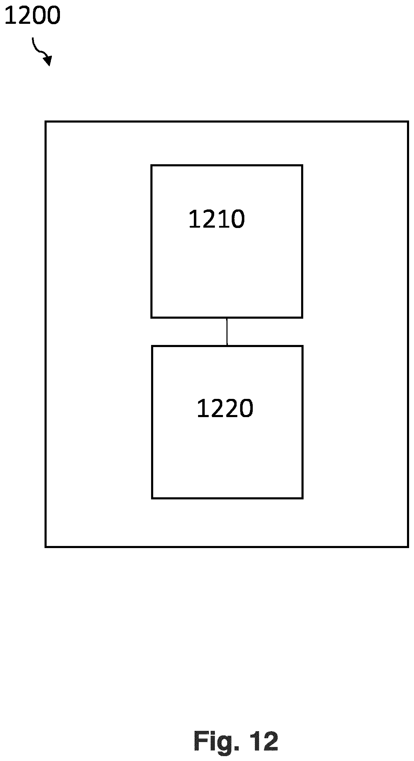

**Fig.** 1 illustrates a block diagram of an example of an apparatus 100. The apparatus 100 is to be considered in the context of a radar sensor. For example, the apparatus 100 may be integrated into a radar system comprising the radar sensor, such as explained with reference to Fig. 12, or external to the radar system. In the former case, the apparatus 100 may be external to or (e.g., partially or fully) integrated into the radar sensor. For instance, the apparatus 100 may be distributed between the radar sensor and a location external to the radar sensor.

The apparatus 100 comprises processing circuitry 120 and optionally comprises interface circuitry 110. In case interface circuitry 110 is present, the interface circuitry 120 may be communicatively coupled (e.g., via a wired or wireless connection) to the processing circuitry 120, e.g., for data exchange between the interface circuitry 110 and the processing circuitry 120.

The interface circuitry 110 may be any device or means for communicating or exchanging data. In case the apparatus 100 comprises the interface circuitry 110, the interface circuitry 110 may be configured to receive data 130 indicating a plurality of chirps measured by the radar sensor. For instance, the interface circuitry 110 may be communicatively coupled to the radar sensor or to a storage device storing the data 130. The interface circuitry 110 may receive the data 130, e.g., via a wired or wireless coupling to the radar sensor or the storage device.

Depending on the specific implementation, the apparatus 100 may dispense with the interface circuitry 110: For example, the processing circuitry 120 may determine said data 130. For instance, the processing circuitry 120 may be integrated into the radar sensor. The radar sensor may be configured to emit a radio frequency signal into the field of view of the radar sensor and measure the plurality of chirps based on a reflection of the radio frequency signal. The processing circuitry 120 may determine the data 130 indicating the plurality of chirps by, e.g., sampling the received reflection and perform further processing of the data 130 within the radar sensor. The processing circuitry 120 may optionally modify the sampled signal in a preprocessing step, e.g., for noise-reduction, DC-removal (direct current) or alike. For instance, the apparatus 100 may comprise memory configured to store the determined data 130.

Alternatively, the processing circuitry 120 may partially determine the data 130. For instance, the processing circuitry 120 may determine a first part of the data 130, whereas at least one external processing circuitry may determine at least one second part of the data 130. The processing circuitry 120 and the external processing circuitry may, e.g., be connected within a distributed computing environment for jointly determining the data 130. In this case, the processing circuitry 120 may either be integrated into the radar sensor or may be external to the radar sensor. The processing circuitry 120 may receive the second part of the data 130, e.g., via an interface to the external processing circuitry such as interface circuitry 110, and further process the first and the second part of the data 130, as described below.

In another alternative, the processing circuitry 120 is partially integrated into the radar sensor and is partially external to the radar sensor. In such cases, the interface circuitry 110 is optional. The processing circuitry 120 may, for instance, comprise a first part (first processing circuitry) which is integrated into the radar sensor and a second part (second processing circuitry) which is external to the radar sensor. In this case, the determination of the data 130 and/or further processing, as described below, may be performed by the first and second part of the processing circuitry 120 in a distributed manner.

The processing circuitry 120 may be, e.g., a single dedicated processor, a single shared processor, or a plurality of individual processors, some of which or all of which may be shared, a digital signal processor (DSP) hardware, an application specific integrated circuit (ASIC), a microcontroller or a field programmable gate array (FPGA). The processing circuitry 120 may optionally be coupled to, e.g., read only memory (ROM) for storing software, random access memory (RAM) and/or non-volatile memory.

The radar sensor may be any device that uses radio waves to, e.g., detect and locate objects. The radar sensor may be an, e.g., FMCW (frequency modulated continuous wave) radar sensor. For instance, the radar sensor may be configured to emit, by a transmitter, a radio frequency signal (Tx signal) into a field of view (a scene) of the radar sensor and receive, by a receiver, a reflection (echo; Rx signal) of the radar frequency signal. The radar sensor or an external device coupled to the radar sensor may generate radar data 130 based on the received reflection of the radio frequency signal by, e.g., sampling the received reflection by means of an analog-to-digital converter (ADC).

For example, the radar data 130 may be, e.g., "raw data" or an intermediate frequency (IF) signal of the radar sensor. For instance, the radar sensor may mix the received echo with a replica of the emitted signal using a mixer to produce the IF signal xIF(t) (e.g., a beat signal). The radar sensor may comprise an amplifier to receive the reflected signals from its antennas. The beat signal xIF(t) may be filtered with a low-pass filter (LPF) and then sampled by the ADC. The ADC may advantageously be capable of sampling the filtered beat signals xout(t) with a sampling frequency that is smaller than the frequency of the received signal received by the receiving antennas.

The plurality of chirps may be parts of the received reflection which are correlated to respective emitted chirps. A chirp may be a radio frequency signal that varies in frequency over time. The frequency of the chirp may be swept over a specific frequency range, e.g., over the chirp bandwidth. For instance, the chirp may be a linearly modulated signal, i.e., a signal of which the frequency increases or decreases linearly over time.

The processing circuitry 120 is configured to determine a covariance of the plurality of chirps based on the radar data 130 and determine at least one of a motion and a presence of an object within a field of view of the radar sensor based on the determined covariance.

The covariance may be a statistical measure of the relationship between at least two samples of the plurality of chirps, e.g., comprising at least one respective sample of at least two of the plurality of chirps. For instance, the processing circuitry 120 may treat the chirps as variables and certain samples of the chirps as data points of these variables to determine the covariance as a measure of how much the variables change together. For instance, the covariance may be realized as a scalar value that ranges from negative infinity to positive infinity where a positive covariance means that the variables tend to increase or decrease together, while a negative covariance means that the variables tend to move in opposite directions.

For example, the processing circuitry 120 may determine the covariance, e.g., by determining a sum of the product of deviations of the chirps from their respective means and dividing the result by the number of observations. For instance, the processing circuitry 120 may determine the covariance based on the following Equation 1:

$$\sigma(x,y) = \frac{1}{n-1} \sum_{i=1}^{n} (x_i - \bar{x})(y_i - \bar{y})$$

Equation 1, where $\sigma(x,y)$ is the covariance of two chirps x and y, n is the number of samples.

For example, the processing circuitry 120 may determine the covariance by determining a covariance matrix. A covariance matrix may be a square matrix used to represent the covariance between multiple chirps. Entries in the covariance matrix may be covariances between each pair of chirps. Diagonal elements of the covariance matrix may represent variances of the individual chirps. The processing circuitry 120 may determine a covariance matrix C, e.g., based on the following Equation 2:

$$C = \begin{pmatrix} \sigma(x,x) & \sigma(x,y) \\ \sigma(y,x) & \sigma(y,y) \end{pmatrix}$$

Equation 2

Note that Equation 1 and Equation 2 refer to a two-dimensional case, but may be generalized to more-dimensional data, e.g., in case more than two chirps are considered.

The covariance or covariance matrix of the chirps may indicate patterns and relationships in the radar data 130. The apparatus 100 may thus provide a computing resource efficient well as energy efficient way to solve radar tasks such as motion or presence detection. The apparatus 100 may enable a simplification of the modulation scheme of the chirps, e.g., a reduction of a number of chirps which may save power, especially in power restricted applications.

For instance, a radar sensor (device) may be used to sense its environments and detect static or moving targets such as persons, vehicles etc. within the field of view of the radar sensor. In order to do so, the radar sensor may be active for a specific amount of time. Keeping the active cycles per second (duty cycle) of, e.g., 10 Hz (Hertz), constant and increasing the number of chirps, power consumption may increase proportionally. In, e.g., consumer, applications where power is a constraint, the radar sensor may be required to be operated in ultra low power mode without compromising the basic functionality. Given the constraints of maximum power consumption of 1 mW (milliwatt) and a duty cycle of 10 Hz, the apparatus 100 may provide a simplified modulation scheme and light weighted signal processing techniques for motion sensing and presence detection. The processing pipeline of the proposed technique may be easily ported to silicon or a small processor.

Conventionally, in FMCW signal processing, a radar sensor may transmit a number N of chirps each with a number $N_{sa}$ of samples and at a slope of mu and sampling frequency fs. A first FFT (fast Fourier transformation) may be applied along fast time for each chirp, yielding a range representation of the radar data and a second FFT applied along slow time (chirp dimension) may result in Doppler information. An MTI (moving target indicator) across the chirps may be applied either in time domain or in frequency domain for distinguishing between static targets and moving targets. However, this conventional method may need a separate processing pipeline for presence detection because the MTI may remove signal components indicating static targets from the radar data and thereby exclude them from further processing.

By contrast, the technique proposed herein may exploit sample (e.g., amplitude) variations across the chirps, e.g., in neighboring bins, to create a covariance score, e.g., for each bin. This may save time, cost and energy for presence and/or motion detection since the rather costlier (e.g., second) FFT may be dispensed with.

For the technique proposed herein, a certain selection of chirps may be made for which the covariance is determined. The processing circuitry 120 may select any number ≥ 2 of chirps of the plurality of chirps and determine the covariance between these selected chirps. For instance, the processing circuitry 120 may, in some examples, be configured to determine the covariance of at most three chirps or at most four chirps of the plurality of chirps. The latter selected chirps may be, e.g., neighboring (consecutive) chirps. Alternatively, the processing circuitry 120 may determine the covariance of any other number of chirps, e.g., any number of chirps greater than four. Using a limited number of chirps may help simplify the processing algorithm, as it reduces the amount of radar data 130 that needs to be processed. This may lead to faster processing times and lower computational requirements. Additionally, it may also improve the accuracy of the results: By using fewer chirps, the processing algorithm may focus on the most important features of the radar data 130, which may lead to more accurate results. In some applications, the selection of the number of chirps used for determining the covariance may be an optimized trade-off between accuracy and computational complexity: Limiting the chirps may lead to sufficient accurate results while decreasing the computational requirements of the processing algorithm.

The above-mentioned selection of chirps may relate to one or several bursts. For instance, the radar sensor may be operated in a burst mode, i.e., transmitting chirps repeatedly in bursts (blocks of chirps). The radar data 130 may therefore be divided into multiple bursts, where each burst has a specific frequency modulation pattern. In some examples, the processing circuitry 120 is configured to determine the covariance by determining a covariance of at least two chirps of the plurality of chirps of one burst and/or at least two chirps of the plurality of chirps of different bursts, e.g., consecutive bursts. In some examples, the processing circuitry 120 may determine the covariance based on four chirps where each pair of two chirps is from a respective burst. By analyzing multiple bursts, the apparatus 100 may build a more complete picture of the target environment, resulting in improved target detection sensitivity and accuracy, as well as increased range resolution. The use of only one burst may, on the other hand, save time (since the duration between chirps of one burst is usually smaller than between bursts) and computational power for determining the covariance.

The radar sensor may further be adapted to the target application. For instance, the radar sensor may be configured to set a chirp-to-chirp delay for the plurality of chirps (e.g., for chirps within one burst) based on a desired sensitivity of the target application. For instance, the chirp-to-chirp delay may be in a range of 1 ms (millisecond) to 50 ms.

Depending on the format in which the radar data 130 is provided or the target application, the radar data 130 may be preprocessed before the covariance is determined. For example, at least one of averaging, mean removal and channel combination may be applied to the radar data 130. For the former, the processing circuitry 120 may be configured to determine an average of at least two chirps of the plurality of chirps and determine the covariance by determining a covariance of the average and a further chirp of the plurality of chirps. For instance, the processing circuitry 120 may determine a respective average of the at least two chirps and at least two further chirps of the plurality of chirps and determine the covariance of the averages. The processing circuitry 120 may average over any number ≥ 2 of the plurality of chirps. The processing circuitry 120 may take, thereby, multiple measurements (chirps) of the same target, and combine the measurements to obtain a single result. For instance, the processing circuitry 120 may apply an averager to average over respective ADC samples of a certain number of chirps and formulate the combined chirps as a new chirp. Averaging may provide an improved signal-to-noise ratio (SNR), reduced noise and interference as well as increased accuracy and resolution. In some examples, the processing circuitry 120 may be configured to average over at most two chirps. The latter may enable a low power mode of the radar sensor while maintaining sufficient accuracy.

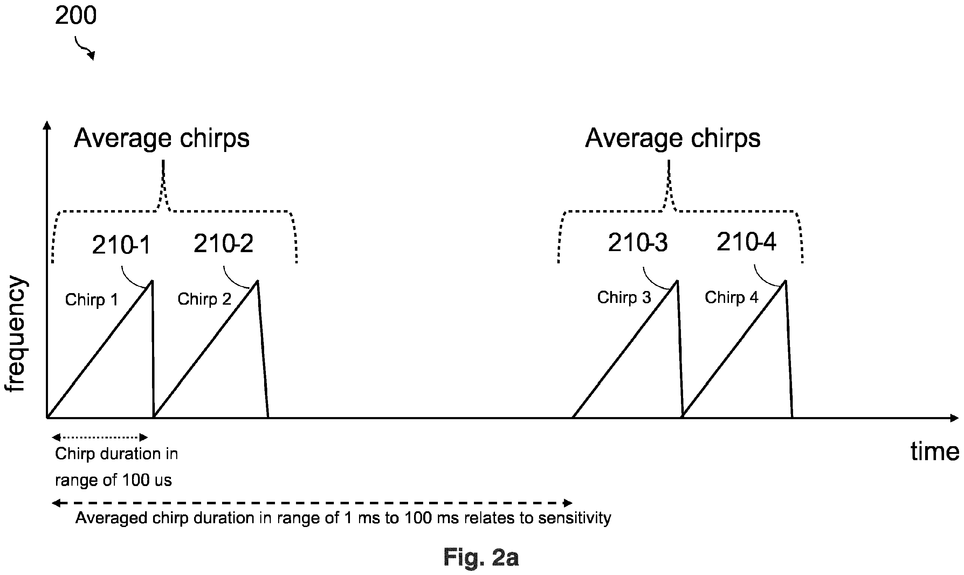

One concrete example of averaging is illustrated by **Fig. 2a.** Fig. 2a shows a frequency-over-time diagram of an example of a modulation scheme 200. The modulation scheme 200 shows a plurality of chirps, e.g., chirps 210-1 to 210-4 which are arranged along the time axis. In the example of Fig. 2a, the chirps 210-1 to 210-4 have a time duration of 100 us (microseconds) each. The processing circuitry 120 may, in the example of Fig. 2a, average over chirps 210-1 and 210-2, yielding a first averaged chirp, as well as over chirps 210-3 and 210-4, yielding a second averaged chirp. A resulting chirp-to-chirp duration between the first averaged chirp and the second averaged chirp may be in a range of 1 to 100 ms, including delays between the chirps 210-1, 210-2 and chirps 210-3 and 210-4. The processing circuitry 120 may then determine a covariance between the first averaged chirp and the second averaged chirp.

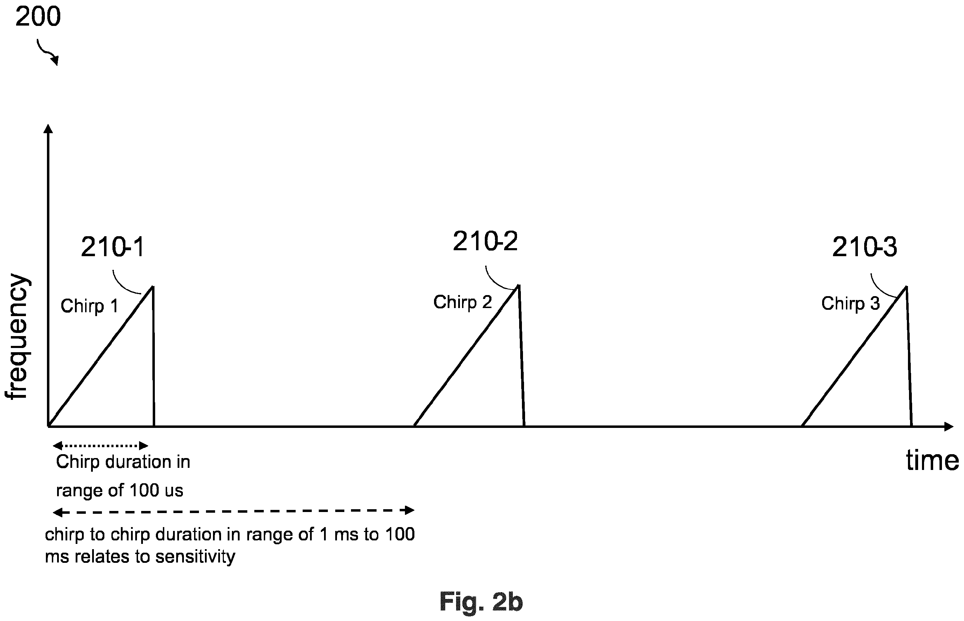

However, averaging may be omitted in some examples. A concrete example of the latter is illustrated by **Fig. 2b.** Fig. 2b shows a frequency-over-time diagram of another example of a modulation scheme 200. The modulation scheme 200 shows a plurality of chirps 210-1 to 210-3 exhibiting a time delay between each other. The processing circuitry 120 may, in the example of Fig. 2b, determine the covariance between the chirps 210-1 to 210-3 without an upstream averaging.

The processing circuitry 120 may, in some examples, base the determination of the at least one of the presence and motion on a certain number of frames. A frame of the radar data 130 may provide a snapshot of the environment at a specific time which comprises multiple chirps of the plurality of chirps. The configuration of the chirp selection in terms of number of chirps per frame, number of bursts per frame or number of chirps for averaging may be adapted to a certain target application. For example, in a first case (configuration), 1 chirp, 2 burst per frame, 2 chirps per frame, 64 samples per chirp and a duty cycle with 10 Hz frequency of 0,02% are set. In a second case, 2 chirps may be used for averaging, 8 bursts are provided per frame, 16 chirps are provided per frame, 64 samples are provided per chirp and the duty cycle with 10 Hz frequency may be 0,31%.

Referring back to the preprocessing mentioned above: In some examples, the processing circuitry 120 is configured to modify the plurality of chirps by attenuating an offset of the plurality of chirps and determine the covariance by determining a covariance of the modified plurality of chirps. The latter may refer to mean removal. Mean removal may be the process of removing a mean value, e.g., a DC (direct current) component or a constant offset, from the radar data 130, e.g., from the ADC samples values of the plurality of chirps. For instance, the processing circuitry 120 may apply zero padding, mean subtraction, median filtering, or a window function to the radar data 130 to attenuate the offset. This may improve the SNR and simplify the processing of the radar data 130.

The radar sensor may, in some cases, be a multi-channel radar sensor, i.e., it may comprise a plurality of channels (antennas) to transmit or receive radar signals, e.g., simultaneously. Each channel may operate independently from other channels and may have its own transmitter, receiver, and signal processing components. The use of multiple channels may provide improved accuracy, increased range, improved resolution and increased data rate. In such cases, the plurality of chirps may be from the plurality of channels of the radar sensor. The processing circuitry 120 may then be configured to determine a combined set of chirps by combining the plurality of chirps over the plurality of channels and determine the covariance by determining a covariance of the combined set of chirps. Any method may be chosen to combine the chirps, such as STAP (Space-Time Adaptive Processing), PCA (Principal Component Analysis) or ICA (Independent Component Analysis). For instance, the respective data of the receivers may be summed to combine their information to a single signal.

In some examples, the processing circuitry 120 may individually process the plurality of channels. For instance, the processing circuitry 120 may determine respective covariances of the plurality of chirps for the plurality of channels, determine respective presence and/or motion based on the covariances, e.g., by using thresholding or a constant false alarm rate (CFAR) algorithm, and combine the determined respective presence and/or motion over the plurality of channels in order to increase the accuracy of the detection. In some examples, the processing circuitry 120 may combine the plurality of channels coherently or non-coherently for identifying the motion/presence of an object in the scene.

The covariance may be determined based on any data structure, e.g., matrix or array structure, or data representation, e.g., time-domain or frequency-domain, of the radar data 130. In some examples, the processing circuitry 120 is configured to determine the covariance based on a range representation of the plurality of chirps. The range representation may refer to a data representation of the radar data 130 in which the samples of the chirps represent or indicate a range values. The range representation may, for instance, be an indication of an energy distribution across ranges for each chirp.

For instance, the radar data 130 may be originally provided in a range representation or the processing circuitry 120 may determine the range representation by transforming, e.g., the (original) ADC samples of the chirps, into range values. For example, the processing circuitry 120 may transform the radar data 130 into the range representation by applying a range FFT, a pulse compression, an autocorrelation or Doppler processing on the radar data 130. In the case of a range FFT, the raw radar data 130 may be transformed using an FFT over fast time. The FFT may separate the radar data 130 into its frequency components, and the range values (e.g., range bins) may be determined from these frequency components since they have a known mathematical relation to the range. The use of range FFT may be advantageous since the radar data 130 is processed in the frequency domain which may provide a better SNR, the possibility to retrieve valuable information from spectral analyses and enhance the accuracy of the range measurement due to noise reduction. The range FFT may further be computationally more efficient, real-time implementable, compatible with multi-target detection and may provide a high dynamic range.

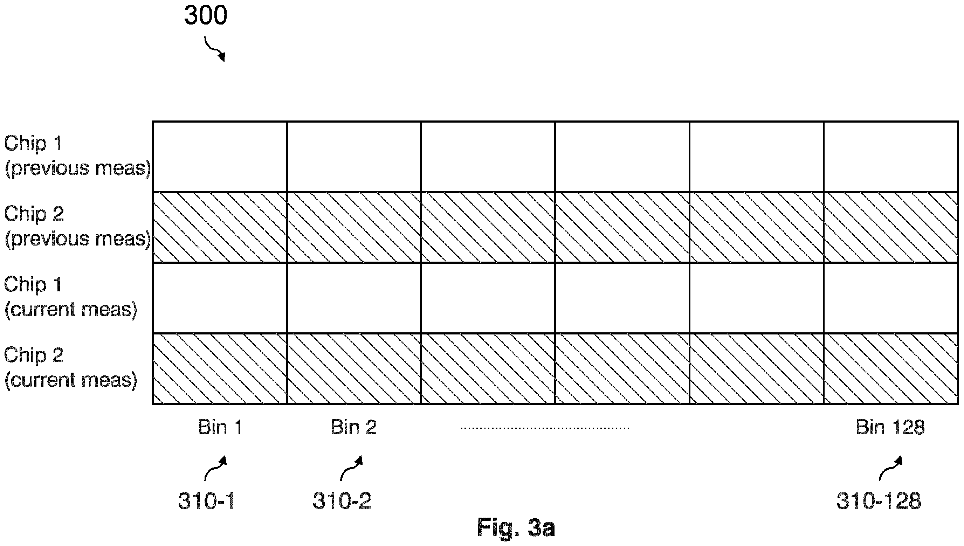

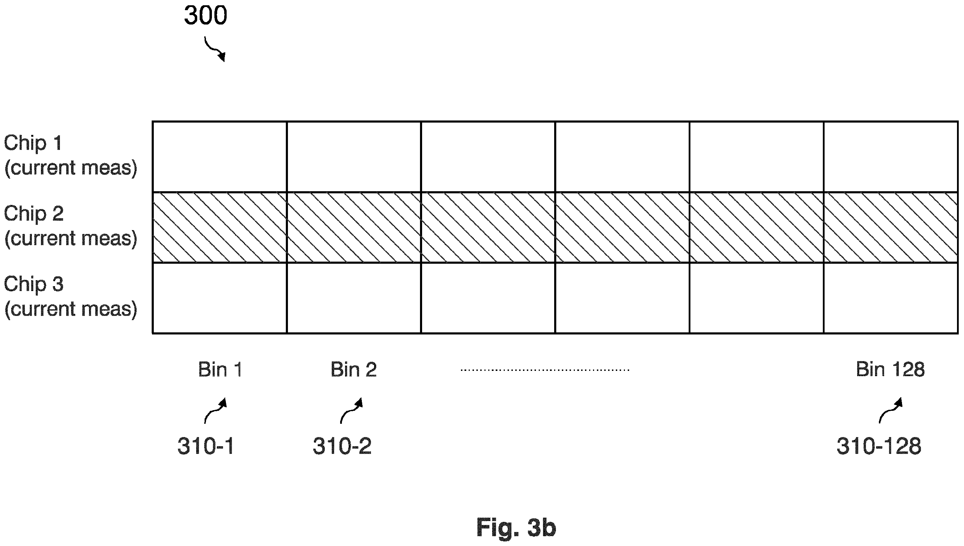

The processing circuitry 120 may, for example, rearrange the radar data 130 into a data format such that the range values of the selected chirps are arranged in range bins. Range bins refer to respective discrete distance intervals into which the range values are binned. Each range bin may correspond to a specific range, and the pieces of the radar data 130 within each bin may represent the combined signal intensity or target information of the selected chirps at that range. This may allow dividing the radar data 130 into separated data pieces which enable separate processing for computational simplification. Examples of such a data format is illustrated by **Figs. 3a and 3b.** Figs. 3a and 3b show a range representation 300 of selected four and three chirps, respectively. Samples of the chirps are assigned to range bins 310-1 to 310-128 and rearranged into a matrix of chirps over range bins.

In the above cases where a range representation is used, the processing circuitry 120 may, for example, be configured to select a predefined number of (e.g., neighboring) range bins of the range representation and determine the covariance by determining a covariance of the selected predefined number of range bins. The processing circuitry 120 may select any number $\geq 1$ of range bins, e.g., according to the range bin resolution and a desired accuracy of the target application. For instance, the processing circuitry 120 may limit the selection to a certain number of range bins, e.g., to three, five or seven range bins, which is smaller than the total number of range bins of the range representation. This may enable a range-specific processing and a simplified determination of range variances between the chirps.

A "covariance score" (the covariance) may be determined by combining several covariance scores. One covariance score may be associated to one or more specific range bins. For example, the processing circuitry 120 may be configured to determine the covariance by determining a plurality of covariance values for the predefined number of range bins and determining a maximum of the (plurality of) covariance values. For instance, the plurality of covariance values may be the entries of a covariance matrix as per Equation 2. This may enable a fast search for the most significant and meaningful range variances between the chirps. Alternatively, the covariance score may be determined, e.g., based on weighting applied to the entries of the covariance matrix.

The processing circuitry 120 may, in some examples, be configured to determine the covariance by determining a respective covariance for each of a plurality of range bins of the range representation by applying a sliding window on the plurality of range bins (e.g. on the radar data 130). A sliding window may be a data processing technique that involves dividing a continuous stream of radar data 130 into overlapping, non-overlapping, or partially overlapping segments, called windows. Each window may comprise a predefined number of data points, and the windows may be moved along the data stream by a predefined amount, e.g., by one data point at a time. For example, the processing circuitry 120 may move the sliding window to each of the range (FFT) bins (cell under test) and calculate the covariance matrix using, e.g., 12 range values from neighboring 2 range (fast time) bins of 2 sweeps (chirps) from the current and 2 sweeps from the previous measurement (burst). The covariance score of the cell under test may correspond to the maximum of the absolute covariance value calculated on the covariance matrix. Using sliding windows may provide a way to process the radar data 130 in a more efficient and effective manner, by dividing the radar data 130 into smaller segments that can be processed individually.

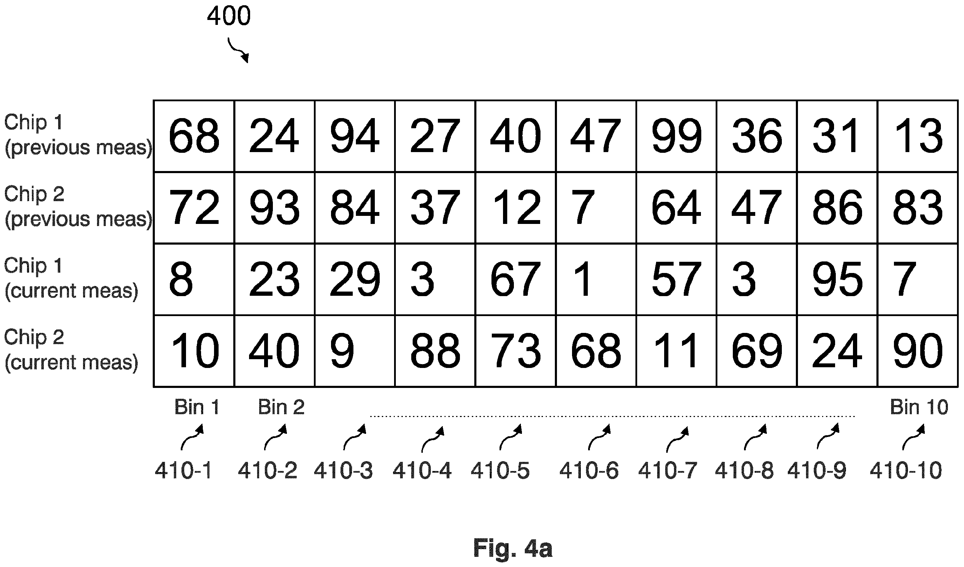

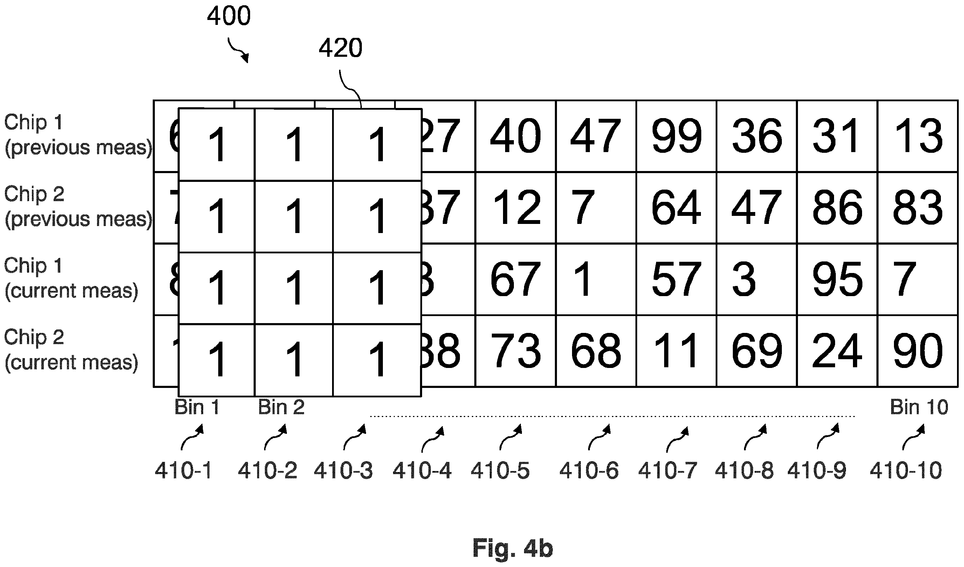

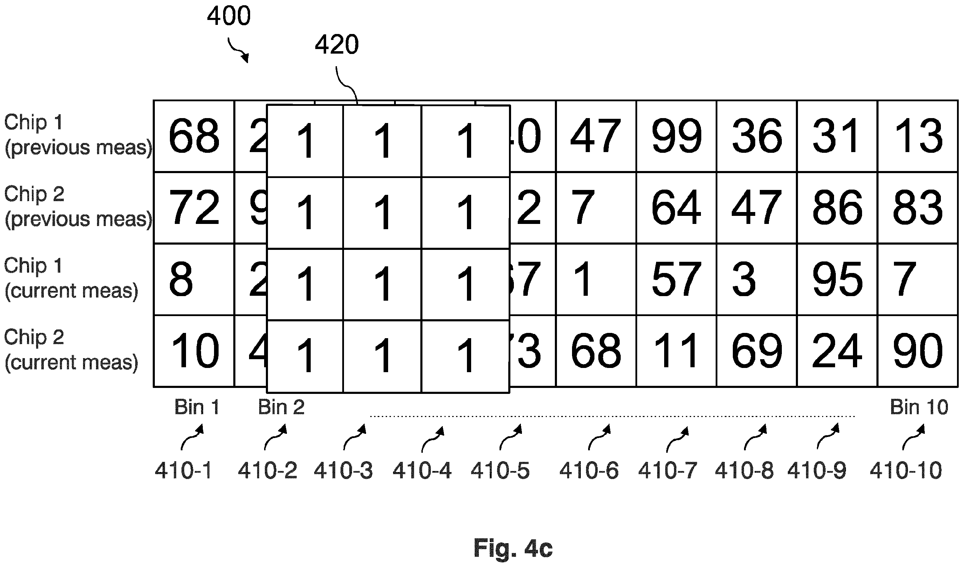

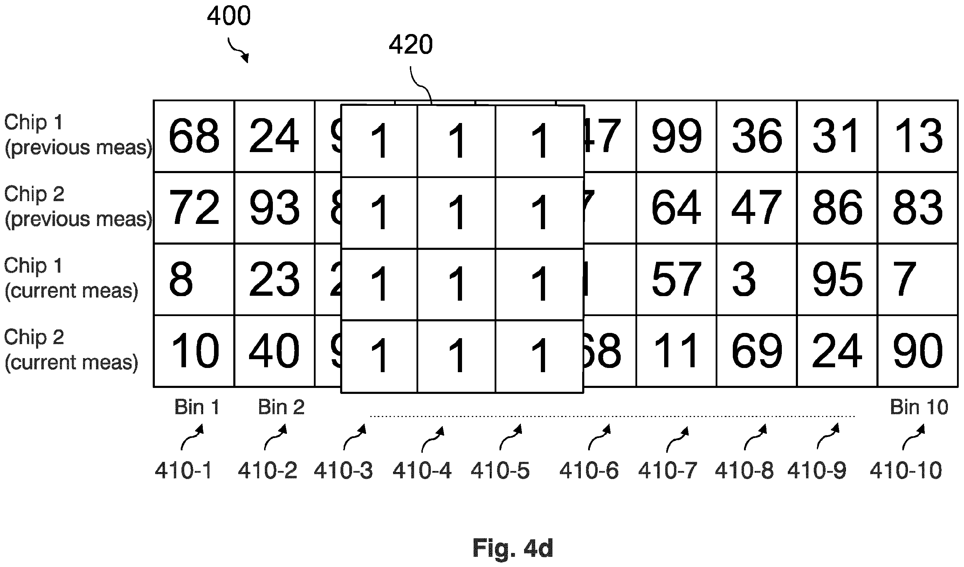

An example of a range representation and an example of a sliding window is illustrated by **Figs. 4a to 4d.** Figs. 4a to 4d show an example of a range representation 400 of four chirps of two different measurements (bursts) with 10 range bins 410-1 to 410-10. The range bins 410-1 to 410-10 show concrete values in the range bins for each of the chirps. In Fig. 4b, a 3x4 sliding window 420 is arranged on top of the range bins 410-1 to 410-3 of the four chirps. In Fig. 4c, the sliding window 420 is moved one range bin to the right and is arranged on top of the range bins 410-2 to 420-4. In Fig. 4d, the sliding window is again moved one range bin to the right and is arranged on top of the range bins 410-3 to 410-5. The processing circuitry 120 may determine the covariance for the values under the sliding window 420, e.g., based on Equation 2. In the example of Fig. 4b, the covariance matrix (array) may be [[1243,7; 600,7; 1410]; [600,7; 1084,7; 458,3]; [1410; 458,3; 1716,7]]. The processing circuitry 120 may determine the covariance (score) of range bin 410-2 by determining a maximum of an absolute of the covariance values of the covariance matrix, which may be 1716,7 in the example of Fig. 4b. In the example of Fig. 4c, the covariance matrix may be [[1084,7; 458,3; 234,3]; [458,3; 1716,7; -615,0]; [234,3; -615,0; 1281,6]]. The maximum of the covariance values (covariance score of range bin 410-3) may be 1716,7 for the example of Fig. 4c. In the example of Fig. 4d, the covariance matrix may be [[1716,7; -615,0; -1000,0]; [-615,0; 1281,6; 236,3]; [-1000,0; 236,3; 782,0]]. The maximum of the covariance values (covariance score of range bin 410-4) may be 1716,7 in the example of Fig. 4d. Alternatively to the examples shown in Fig. 4a to Fig. 4d, the processing circuitry 120 may determine the covariance based on any other number of (e.g., neighboring) range bins.

The covariance may comprise respective covariance scores for each window. The covariance scores may provide a relation between amplitude variations of neighboring range bins and bursts. In some cases, hard thresholding may require an upstream scaling due to SNR variations and differing covariance score scales between the windows. So, in some examples, the processing circuitry 120 is configured to normalize the covariance and determine the at least one of the motion and the presence of the object based on the normalized covariance. The latter may increase the performance of the processing of the radar data 130. The processing circuitry 120 may normalize the covariance based on any normalization method, e.g., min-max, z-score or logarithmic normalization.

In some examples, the processing circuitry 120 may be configured to normalize the covariance by applying a softmax function on the covariance. A softmax function may be a mathematical function for normalizing values into a probability distribution. The softmax function may, for instance, map an N-dimensional vector of real numbers to another N-dimensional vector of real numbers, where each element of the output vector is a non-negative value that represents the probability of a particular class. For example, the softmax function may output a probability distribution of an event over 'n' different events. After applying the softmax function, the covariance scores of the range bins are provided as values between 0 and 1 so that they can be interpreted in term of probabilities. The use of a softmax function may enable normalization based on probability distribution which simplifies the interpretation of the results, and it may additionally enable a classification (e.g., of motion and presence) even in multi-class environments. The softmax function may further output log-probabilities, which may help to improve numerical stability, especially when working with large or sparse data.

For example, the softmax function may output the covariance in a form given by Equation 3:

$$\sigma(z)_i = \frac{e^{z_i}}{\sum_{i=1}^{K} e^{z_i}} \text{ for } i = 1, \dots, K \text{ and } \mathbf{z} = (z_1, \dots, z_K) \, \epsilon \, \mathbb{R}^K$$

Equation 3, where $z_i$ is the covariance score obtained for a range bin i, where e is an exponential function, where K is the total number of range bins.

In the following, more details are given regarding the motion and object detection based on the covariance. In some examples, the processing circuitry 120 may be configured to determine both, presence of objects in the field of view of the radar sensor and motion of objects in the field of view. In these cases, the apparatus 100 may save an extra processing pipeline in comparison to conventional signal processing techniques and therefore enable energy and computationally efficient radar sensing.

The processing circuitry 120 may determine the motion or the presence with any detection algorithm. The processing circuitry 120 may, in some examples, be configured to determine the presence of the object by applying at least one of an adaptive thresholding and a CFAR algorithm to the covariance. This may help distinguishing between targets and a noise floor in the (normalized) covariance values. Additionally or alternatively, the processing circuitry 120 may, determine (confirm) presence of a quasi-static object (e.g., a person) in a field of view of the radar sensor (e.g., in a scene the radar sensor emits the radio frequency signal to). For instance, the processing circuitry 120 may observe micro/minor/major motions of the object as amplitude variations around a range of interest (corresponding to that of the object, e.g., a person). In some examples, The processing circuitry 120 may determine (identify) presence or motion of the object based on a reference frame (e.g., a first burst or first chirp may be used as reference frame).

Adaptive thresholding may be a method of setting a threshold for signal detection based on statistical properties of the surrounding noise. The threshold may be continuously updated based on the noise statistics, such that it adapts to changing conditions. CFAR may be a specific type of adaptive thresholding that maintains a constant false alarm rate over a specified range of SNRs. CFAR algorithms may include techniques such as spatial smoothing, cell averaging, and reference cells to determine the noise statistics and set the threshold dynamically. Dynamic algorithms like adaptive thresholding and CFAR may allow the detection to be more robust in the face of changing noise levels and help to reduce the number of false alarms. They may improve target detection performance, especially in noisy environments, exhibit high robustness and may provide simple implementation with reduced complexity since only no or few parameters are to be set manually.

Depending on the noise conditions and the requirements of the target application, a specific target detection algorithm may be selected. In case of a CFAR algorithm, the processing circuitry 120 may be configured to determine the presence of the object by applying at least one of an ordered statistics CFAR (OS-CFAR) algorithm and a cell averaging CFAR (CA-CFAR) algorithm to the covariance. OS-CFAR may use ordered statistics to determine the threshold for target detection, e.g., it may use the R-th smallest or largest sample in a set of covariance values to estimate the noise level and set the threshold dynamically. OS-CFAR may be more robust to non-stationary noise compared to other detection algorithms. CA-CFAR may use the average of the covariance values in a set of reference cells (range bins) to determine the noise level. The threshold may be set by adding a factor, such as the standard deviation, to the average to account for the noise variability. The latter method may be simpler to implement and faster.

In cases where the processing circuitry 120 is configured to determine the presence of the object based on the covariance, the processing circuitry 120 may, in some examples, be further configured to determine at least one of an azimuth and an elevation angle of the (detected) object based on a phase difference of a plurality of channels of the radar sensor. For instance, the processing circuitry 120 may be configured to determine the at least one of the azimuth and the elevation angle by using a phase-comparison monopulse method. For instance, the processing circuitry 120 may apply the phase-comparison monopulse method on a current frame of the radar data 130. The phase difference between the respective received signals of the channels may be proportional to a respective angle of arrival. By comparing the phase differences, the direction of the incoming signal may be determined. The advantage of phase-comparison monopulse may be that it provides an accurate measurement of the direction and is less sensitive to amplitude variations.

For example, the processing circuitry 120 may determine the azimuth angle of a target for a particular range bin az based on Equation 4:

$$az = asind(alpha \cdot lambda/(2 \cdot \pi \cdot dd\_rx))$$

Equation 4, where asind is the arc sin operation giving degrees as results, alpha is the unwrapped phase difference between two receiver channels placed in azimuth direction (antennas places parallel to a horizontal line), lambda is the velocity of light or a center frequency of the FMCW signal, dd_rx is the distance between the chosen receiver channels.

For example, the processing circuitry 120 may determine the elevation angle of a target for a particular range bin ea based on Equation 5:

$$ea = asind(alpha \cdot lambda/(2 \cdot \pi \cdot dd\_rx))$$

Equation 5, where asind is the arc sin operation giving degrees as results, alpha is the unwrapped phase difference between two receiver channels placed in elevation direction (antennas places perpendicular to the horizontal line), lambda is the velocity of light or center frequency of the FMCW signal and dd_rx is the distance between the chosen receiver channels.

In cases where the processing circuitry 120 is configured to determine the motion of the object based on the covariance, the processing circuitry 120 may be configured to determine the motion based on a phase difference of the plurality of chirps. For instance, the processing circuitry 120 may determine the Doppler based on phase differences between two chirps of the current frame. This may enable a coarse Doppler estimation rather than costlier FFT. The processing circuitry 120 may, for example, determine the Doppler for a particular range bin rb based on Equation 6:

$$rb = alpha \cdot lambda/4/\pi/T\_sw\_sw$$

Equation 6, where alpha is the unwrapped phase difference between two chirps, lambda is the velocity of light or center frequency of the FMCW signal and T_sw_sw is the chirp-to-chirp duration.

The azimuth and elevation angle may, for instance, be estimated after applying a calibration matrix on the covariance. The azimuth and elevation angle may provide the ability to narrow down the field of interest for detecting a target's range and Doppler.

The processing circuitry 120 may, in some examples, be configured to determine the presence of the object based on the covariance and classify the object as static or moving based on the plurality of chirps. Any classification algorithm may be used, such as the above mentioned softmax function. Alternatively, an artificial neural network (ANN) algorithm may be applied which uses a machine learning approach to classify targets based on their covariance signature. The ANN may be trained on a dataset of radar returns from known targets, and may learn to recognize the radar signature of each target type. Once the ANN is trained, it may be used to classify new radar returns in real-time.

In some examples, the processing circuitry 120 is configured to determine the presence of the object based on the covariance and by using a tracking method. A tracking method may be any technique for following and monitoring the movement of targets over time, such as Kal-man filtering, multiple hypothesis tracking or alike. The tracking method may allow the apparatus 100 to detect several targets and maintain a continuous and accurate estimate of the target's position and/or velocity, even in the presence of measurement errors and environmental noise.

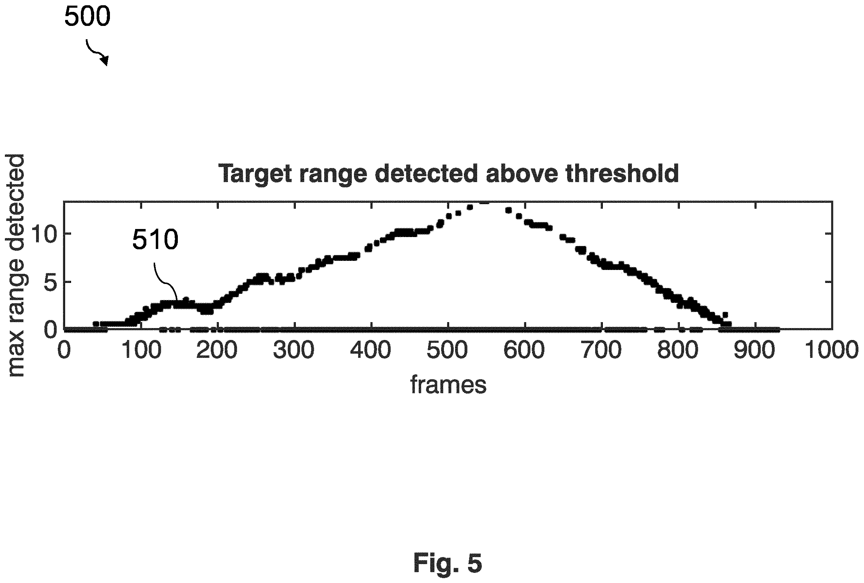

Figs. 5 to 11 illustrate examples of time diagrams of an output of an apparatus as described herein, e.g., apparatus 100, for a specific scenario in which a target (e.g., a human or a pet) moves in a random fashion from a range of 0 m (meter) to a range of 13 m and returns to 0 m in a field of view of a 60 GHz (Gigahertz) radar sensor. **Fig. 5** illustrates an example of a range-over-time diagram 500 for the said scenario. The data points 510 of the maximum range detected represent an increasing course from 0 to 13 for frames 0 to 550 and a decreasing course from 13 to 13 for frames 550 to 900.

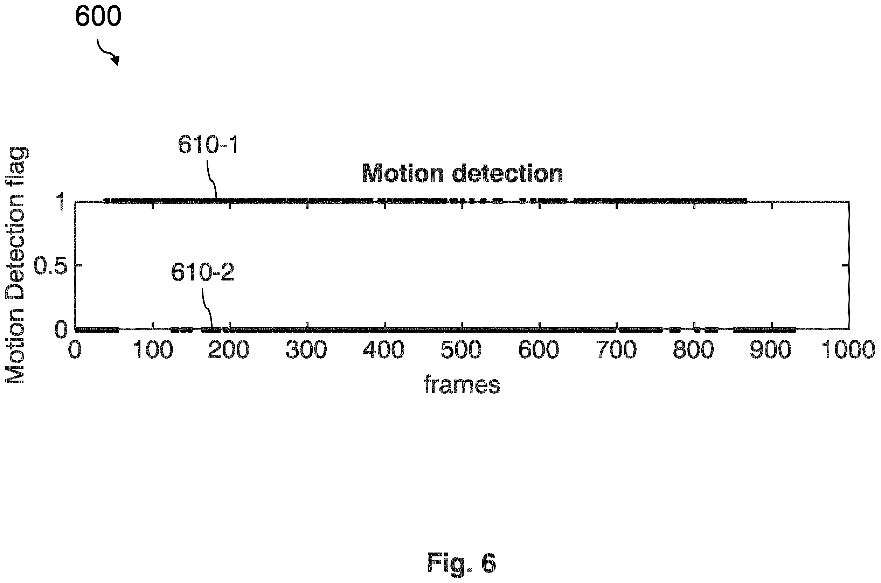

**Fig. 6** illustrates an example of a motion flag 600 over time for the said scenario. The data points of the motion flag 600 comprise first data points 610-1 with value 1 indicating a detected motion and second data points 610-2 with value 0 indicating no detected motion.

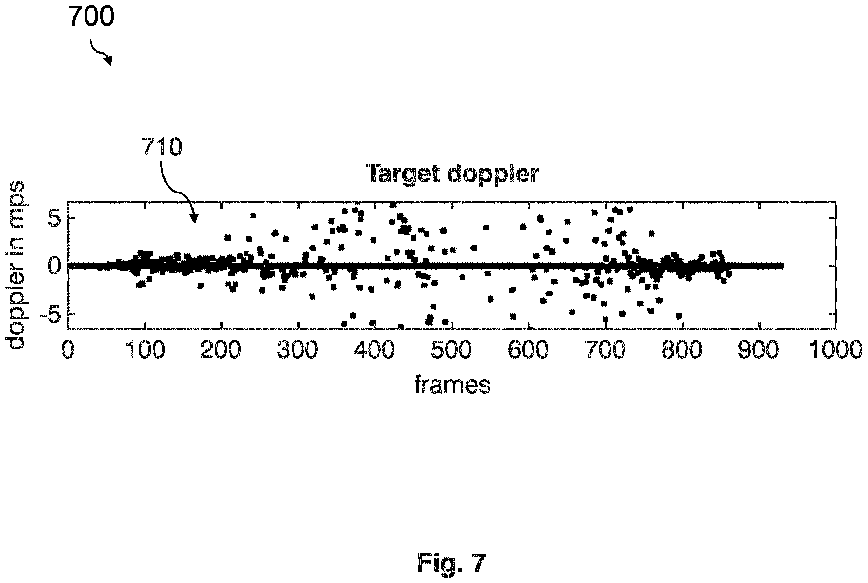

**Fig. 7** illustrates an example of a Doppler (motion) 700 in meter per seconds over time for the said scenario. The data points 710 of the Doppler 700 spread over a value range of -6 to 6 around a zeroline.

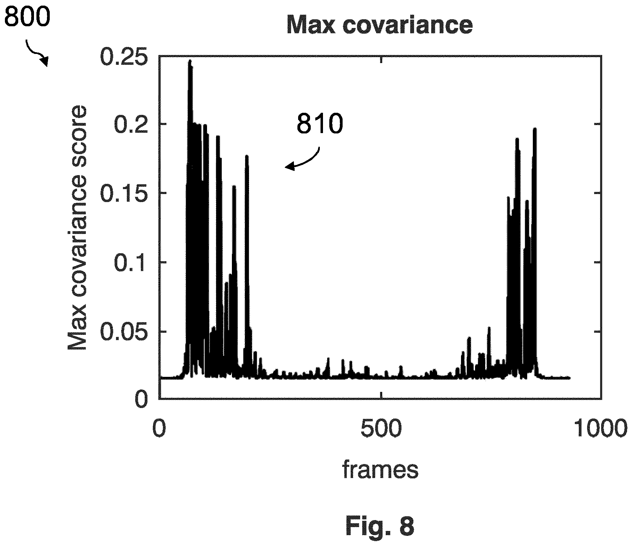

**Fig. 8** illustrates an example of a (max) covariance score 800 over time for the said scenario. The data points 810 of the covariance score 800 vary between 0,01 and 0,25 in the first fourth and the last fourth of the 1000 frames shown. For the in-between frames, the data points 810 exhibit stable values of about 0,01.

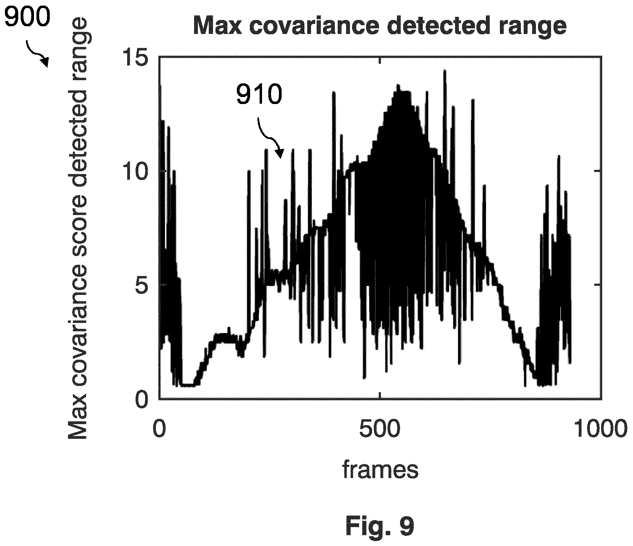

**Fig. 9** illustrates an example of a range 900 over time corresponding to the covariance score 800 of Fig. 8. The data points 910 of the range 900 show the shape of the data points 510 of Fig. 5 but in a blurry way varying around the data points 510.

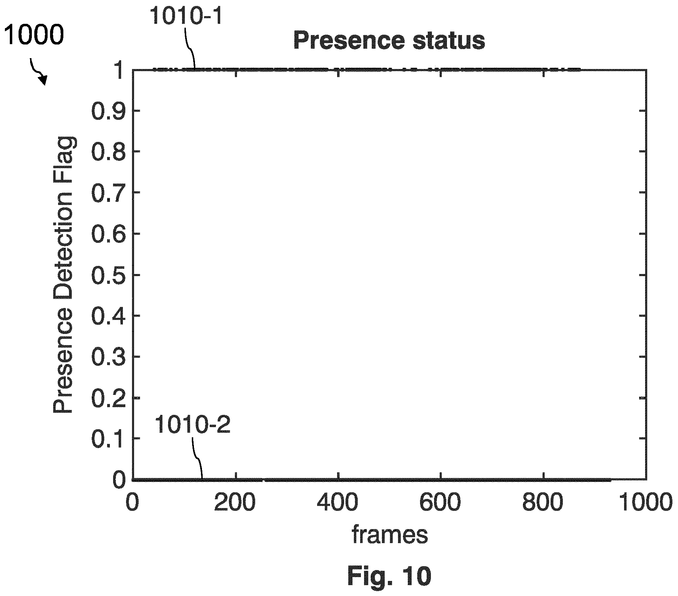

**Fig. 10** illustrates an example of a presence flag 1000 over time for the said scenario. The data points of the motion flag 1000 comprise first data points 1010-1 with value 1 indicating a detected presence of an object and second data points 1010-2 with value 0 indicating no detected presence.

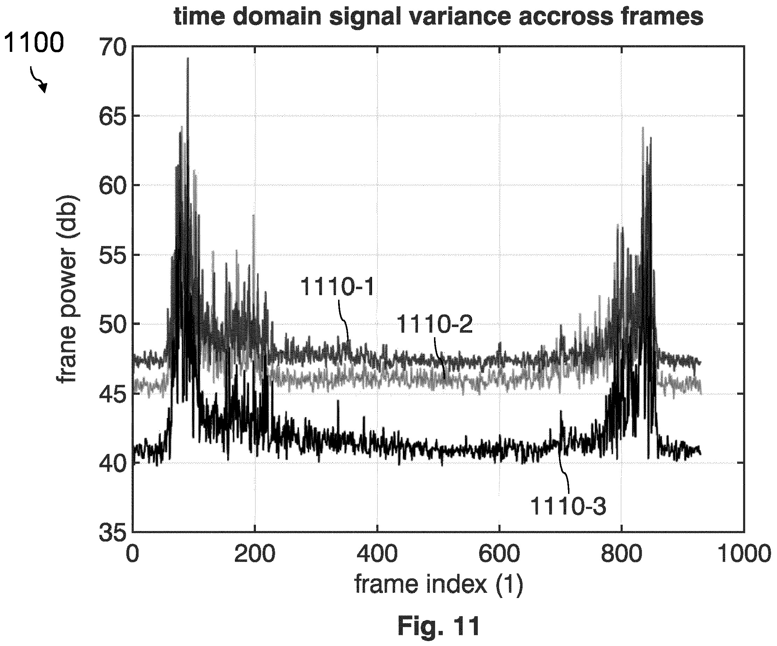

**Fig. 11** illustrates an example of a frame power distribution 1100 in db (decibel) over time for three channels of the radar sensor. First data points 1110-1, second data points 1110-2 and third data points 1110-3 of the frame power distribution 1100 show the time domain signal variance for a first, a second and a third channel of a radar sensor, respectively.

The apparatus 100 may provide a simple and light weight motion and presence detection which may be easily implemented on silicon with less memory. This may help developing an ultra cheap (1 dollar) device for motion and presence detection.

**Fig. 12** illustrates an example of a radar system 1200 comprising an apparatus 1210 as described herein, such as apparatus 100, and the radar sensor 1220, such as described with reference to the previous figures. The radar sensor 1220 is configured to emit a radio frequency signal into the field of view and measure the plurality of chirps based on a received reflection of the radio frequency signal.

Although the apparatus 1210 and the radar sensor 1220 are depicted as separate blocks in Fig. 12, in other examples, the apparatus 1210 may in part or in entirety be included in the radar sensor 1220, which thus correspondingly includes all or part of the processing circuitry (e.g., processing circuitry 120) of the apparatus 1210.

In case the apparatus 1210 is only partially included in the radar sensor 1220, the radar system 1200 may include distributed processing circuitry carrying out respective parts of the processing steps, e.g., in the form of first processing (sub-) circuitry included in the radar sensor 1220, and second processing (sub-) circuitry external to the sensor and in communication with the first processing circuitry through interface circuitry (e.g., interface circuitry 110), for instance, for exchange of data between the first and the second processing circuitry.

In case the apparatus 1210 is integrated in the radar sensor 1220, the processing circuitry and the radar sensor 1220 may be jointly integrated in a single semiconductor chip, or in more than one semi-conductor chip.

In case the apparatus 1210 is not included in the radar sensor 1220, the processing circuitry may take the form of circuitry external to the radar sensor 1220 and may be communicatively coupled therewith through interface circuitry.

More details and aspects of the radar system 1200 are explained in connection with the proposed technique or one or more examples described above, e.g., with reference to Fig. 1. The system 1200 may comprise one or more additional optional features corresponding to one or more aspects of the proposed technique, or one or more examples described above.

The radar system 1200 may provide a simple and light weight motion and presence detection which may be easily implemented on silicon with less memory.

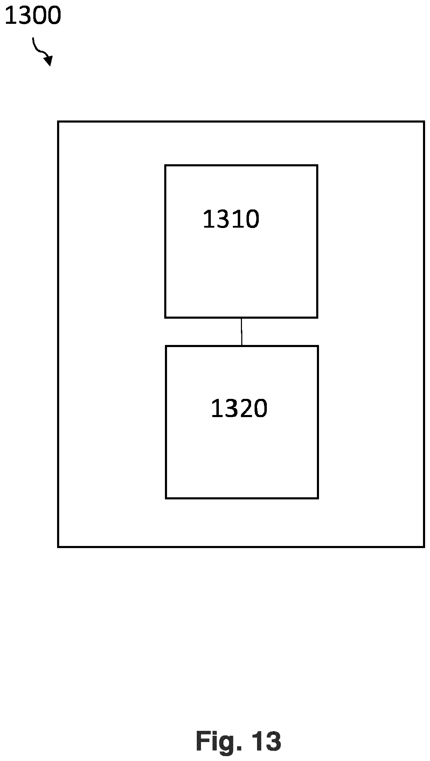

**Fig. 13** illustrates an example of an electronic device 1300 comprising a radar system 1310 as described herein, such as radar system 1200, and control circuitry 1320. The control circuitry 1320 is configured to control an operation of the electronic device 1300 based on the determined at least one of the motion and the presence of the object.

The control circuitry 1320 may be a single dedicated processor, a single shared processor, or a plurality of individual processors, some of which or all of which may be shared, a digital signal processor (DSP) hardware, an application specific integrated circuit (ASIC) or a field programmable gate array (FPGA). The control circuitry 1320 may optionally be coupled to, e.g., read only memory (ROM) for storing software, random access memory (RAM) and/or non-volatile memory.

The electronic device 1300 may be any device with a sensing, e.g., ranging, function. The electronic device 1300 may be, e.g., a consumer device. The electronic device 1300 may be, e.g., an audio equipment such as a speaker, a lighting device such as a controllable light source, a computing device such as a laptop, a camera or a telecommunication device such as a television receiver. For instance, the radar system 1310 may be configured to detect presence of a user of the electronic device 1300.

The use of the radar system 1310 may be especially advantages in applications that don't require ultra precise angle and Doppler estimation but need to reduce its overall power usage, e.g., to enhance the battery life of the electronic device 1300. Possible applications may be tracking people to perform audio beam steering in audio devices, automatic brightness control in smart lighting devices, focusing on people and area of interest with a camera.

The control circuitry 1320 may control the operation of the electronic device 1300, e.g., by activating or deactivating a certain function of the electronic device 1300 based on the processed data, e.g., a certain function may be activated if it is determined that a user of the electronic device 1300 is present. For instance, the control circuitry 1320 may, if it is determined that a user is close, automatically play a video or prevent the electronic device 1300 to change into standby.

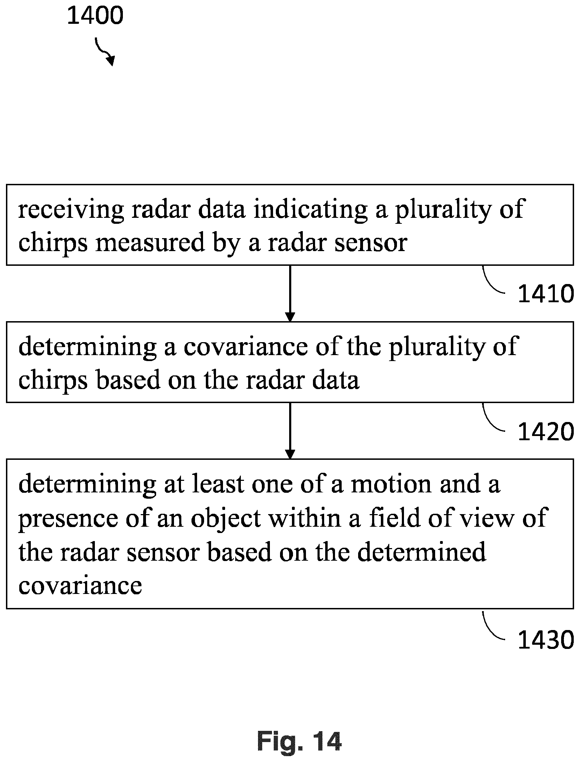

**Fig. 14** illustrates a flowchart of an example of a (e.g., computer-implemented) method 1400. The method 1400 may be performed by an apparatus described herein, such as apparatus 100. The method 1400 comprises determining 1410 a covariance of a plurality of chirps measured by a radar sensor and determining 1430 at least one of a motion and a presence of an object within a field of view of the radar sensor based on the determined covariance.

More details and aspects of the method 1400 are explained in connection with the proposed technique or one or more examples described above, e.g., with reference to Fig. 1. The method 1400 may comprise one or more additional optional features corresponding to one or more aspects of the proposed technique, or one or more examples described above.

The method 1400 may provide a simple and light weight motion and presence detection which may be easily implemented on silicon with less memory.

In the following, some examples of the proposed concept are presented:
An example (e.g., example 1) relates to an apparatus comprising processing circuitry configured to determine a covariance of a plurality of chirps measured by radar sensor, and determine at least one of a motion and a presence of an object within a field of view of the radar sensor based on the determined covariance.

Another example (e.g., example 2) relates to a previous example (e.g., example 1) or to any other example, further comprising that the processing circuitry is configured to determine the covariance of at most three chirps or at most four chirps of the plurality of chirps.

Another example (e.g., example 3) relates to a previous example (e.g., one of the examples 1 or 2) or to any other example, further comprising that the processing circuitry is configured to determine the covariance by determining a covariance of at least two chirps of the plurality of chirps of one burst and/or at least two chirps of the plurality of chirps of different bursts.

Another example (e.g., example 4) relates to a previous example (e.g., one of the examples 1 to 3) or to any other example, further comprising that the processing circuitry is configured to determine an average of at least two chirps of the plurality of chirps and determine the covariance by determining a covariance of the average and a further chirp of the plurality of chirps.

Another example (e.g., example 5) relates to a previous example (e.g., one of the examples 1 to 4) or to any other example, further comprising that the processing circuitry is configured to modify the plurality of chirps by attenuating an offset of the plurality of chirps and determine the covariance by determining a covariance of the modified plurality of chirps.

Another example (e.g., example 6) relates to a previous example (e.g., one of the examples 1 to 5) or to any other example, further comprising that the plurality of chirps are from a plurality of channels of the radar sensor, and wherein the processing circuitry is configured to determine a combined set of chirps by combining the plurality of chirps over the plurality of channels and determine the covariance by determining a covariance of the combined set of chirps.

Another example (e.g., example 7) relates to a previous example (e.g., one of the examples 1 to 6) or to any other example, further comprising that the processing circuitry is configured to determine the covariance based on a range representation of the plurality of chirps.

Another example (e.g., example 8) relates to a previous example (e.g., example 7) or to any other example, further comprising that the processing circuitry is configured to select a predefined number of range bins of the range representation, and determine the covariance by determining a covariance of the selected predefined number of range bins.

Another example (e.g., example 9) relates to a previous example (e.g., example 8) or to any other example, further comprising that the processing circuitry is configured to determine the covariance by determining a plurality of covariance values for the predefined number of range bins and determining a maximum of the covariance values.

Another example (e.g., example 10) relates to a previous example (e.g., one of the examples 7 to 9) or to any other example, further comprising that the processing circuitry is configured to determine the covariance by determining a respective covariance for each of a plurality of range bins of the range representation by applying a sliding window on the plurality of range bins.

Another example (e.g., example 11) relates to a previous example (e.g., one of the examples 1 to 10) or to any other example, further comprising that the processing circuitry is configured to normalize the covariance and determine the at least one of the motion and the presence of the object based on the normalized covariance.

Another example (e.g., example 12) relates to a previous example (e.g., example 11) or to any other example, further comprising that the processing circuitry is configured to normalize the covariance by applying a softmax function on the covariance.

Another example (e.g., example 13) relates to a previous example (e.g., one of the examples 1 to 12) or to any other example, further comprising that the processing circuitry is configured to determine the presence of the object by applying at least one of an adaptive thresholding and a constant false alarm rate, CFAR, algorithm to the covariance.

Another example (e.g., example 14) relates to a previous example (e.g., example 13) or to any other example, further comprising that the processing circuitry is configured to determine the presence of the object by applying at least one of an ordered statistics CFAR algorithm and a cell averaging CFAR algorithm to the covariance.

Another example (e.g., example 15) relates to a previous example (e.g., one of the examples 1 to 14) or to any other example, further comprising that the processing circuitry is configured to determine the presence of the object based on the covariance, and wherein the processing circuitry is further configured to determine at least one of an azimuth and an elevation angle of the object based on a phase difference of a plurality of channels of the radar sensor.

Another example (e.g., example 16) relates to a previous example (e.g., example 15) or to any other example, further comprising that the processing circuitry is configured to determine the at least one of the azimuth and the elevation angle by using a phase-comparison monopulse method.

Another example (e.g., example 17) relates to a previous example (e.g., one of the examples 1 to 16) or to any other example, further comprising that the processing circuitry is configured to determine the motion of the object based on the covariance and a phase difference of the plurality of chirps.

Another example (e.g., example 18) relates to a previous example (e.g., one of the examples 1 to 17) or to any other example, further comprising that the processing circuitry is configured to determine the presence of the object based on the covariance and classify the object as static or moving based on the plurality of chirps.

Another example (e.g., example 19) relates to a previous example (e.g., one of the examples 1 to 18) or to any other example, further comprising that the processing circuitry is configured to determine the presence of the object based on the covariance and by using a tracking method.

An example (e.g., example 20) relates to a radar system, comprising the apparatus of any previous example (e.g., one of examples 1 to 19) or to any other example, and the radar sensor, the radar sensor being configured to emit a radio frequency signal into the field of view and measure the plurality of chirps based on a received reflection of the radio frequency signal.

An example (e.g., example 21) relates to an electronic device, comprising the radar system of a previous example (e.g., example 20) or to any other example, and control circuitry configured to control an operation of the electronic device based on the determined at least one of the motion and the presence of the object.

An example (e.g., example 22) relates to a computer-implemented method, comprising determining a covariance of a plurality of chirps measured by a radar sensor, and determining at least one of a motion and a presence of an object within a field of view of the radar sensor based on the determined covariance.

The aspects and features described in relation to a particular one of the previous examples may also be combined with one or more of the further examples to replace an identical or similar feature of that further example or to additionally introduce the features into the further example.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, - functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

**Claims**

1. An apparatus (100) comprising processing circuitry (120) configured to:

   determine a covariance of a plurality of chirps measured by a radar sensor; and
   determine at least one of a motion and a presence of an object within a field of view of the radar sensor based on the determined covariance.

2. The apparatus (100) of claim 1, wherein the processing circuitry (120) is configured to determine the covariance of at most three chirps or at most four chirps of the plurality of chirps.

3. The apparatus (100) of any one of the previous claims, wherein the processing circuitry (120) is configured to determine the covariance by determining a covariance of at least two chirps of the plurality of chirps of one burst and/or at least two chirps of the plurality of chirps of different bursts.

4. The apparatus (100) of any one of the previous claims, wherein the processing circuitry (120) is configured to determine an average of at least two chirps of the plurality of chirps and determine the covariance by determining a covariance of the average and a further chirp of the plurality of chirps.

5. The apparatus (100) of any one of the previous claims, wherein the processing circuitry (120) is configured to modify the plurality of chirps by attenuating an offset of the plurality of chirps and determine the covariance by determining a covariance of the modified plurality of chirps.

6. The apparatus (100) of any one of the previous claims, wherein the plurality of chirps are from a plurality of channels of the radar sensor, and wherein the processing circuitry (120) is configured to determine a combined set of chirps by combining the plurality of chirps over the plurality of channels and determine the covariance by determining a covariance of the combined set of chirps.

7. The apparatus (100) of any one of the previous claims, wherein the processing circuitry (120) is configured to determine the covariance based on a range representation of the plurality of chirps.

8. The apparatus (100) of claim 7, wherein the processing circuitry (120) is configured to:

   select a predefined number of range bins of the range representation; and
   determine the covariance by determining a covariance of the selected predefined number of range bins.

9. The apparatus (100) of any one of claim 8, wherein the processing circuitry (120) is configured to determine the covariance by determining a plurality of covariance values for the predefined number of range bins and determining a maximum of the covariance values.

10. The apparatus (100) of any one of claims 7 to 9, wherein the processing circuitry (120) is configured to determine the covariance by determining a respective covariance for each of a plurality of range bins of the range representation by applying a sliding window on the plurality of range bins.

11. The apparatus (100) of any one of the previous claims, wherein the processing circuitry (120) is configured to normalize the covariance and determine the at least one of the motion and the presence of the object based on the normalized covariance.

12. The apparatus (100) of claim 11, wherein the processing circuitry (120) is configured to normalize the covariance by applying a softmax function on the covariance.

**13.** A radar system (1200), comprising:

the apparatus (1210) of any one of claims 1 to 12; and
the radar sensor (1220), the radar sensor (1220) being configured to emit a radio frequency signal into the field of view and measure the plurality of chirps based on a received reflection of the radio frequency signal.

**14.** An electronic device (1300), comprising:

the radar system (1310) of claim 13; and
control circuitry (1320) configured to control an operation of the electronic device based on the determined at least one of the motion and the presence of the object.

**15.** A method (1400), comprising:

determining (1410) a covariance of a plurality of chirps measured by a radar sensor; and
determining (1420) at least one of a motion and a presence of an object within a field of view of the radar sensor based on the determined covariance.

**Amended claims in accordance with Rule 137(2) EPC.**

**1.** An apparatus (100) comprising processing circuitry (120) configured to:

determine a covariance of a plurality of chirps measured by a radar sensor; and
determine at least one of a motion and a presence of an object within a field of view of the radar sensor by applying at least one of an adaptive thresholding and a constant false alarm rate, CFAR, algorithm to the covariance.

**2.** The apparatus (100) of claim 1, wherein the processing circuitry (120) is configured to determine the covariance of at most three chirps or at most four chirps of the plurality of chirps.

**3.** The apparatus (100) of any one of the previous claims, wherein the processing circuitry (120) is configured to determine the covariance by determining a covariance of at least two chirps of the plurality of chirps of one burst and/or at least two chirps of the plurality of chirps of different bursts.

**4.** The apparatus (100) of any one of the previous claims, wherein the processing circuitry (120) is configured to determine an average of at least two chirps of the plurality of chirps and determine the covariance by determining a covariance of the average and a further chirp of the plurality of chirps.

**5.** The apparatus (100) of any one of the previous claims, wherein the processing circuitry (120) is configured to modify the plurality of chirps by attenuating an offset of the plurality of chirps and determine the covariance by determining a covariance of the modified plurality of chirps.

**6.** The apparatus (100) of any one of the previous claims, wherein the plurality of chirps are from a plurality of channels of the radar sensor, and wherein the processing circuitry (120) is configured to determine a combined set of chirps by combining the plurality of chirps over the plurality of channels and determine the covariance by determining a covariance of the combined set of chirps.

**7.** The apparatus (100) of any one of the previous claims, wherein the processing circuitry (120) is configured to determine the covariance based on a range representation of the plurality of chirps.

**8.** The apparatus (100) of claim 7, wherein the processing circuitry (120) is configured to:

select a predefined number of range bins of the range representation; and
determine the covariance by determining a covariance of the selected predefined number of range bins.

**9.** The apparatus (100) of any one of claim 8, wherein the processing circuitry (120) is configured to determine the covariance by determining a plurality of covariance values for the predefined number of range bins and determining a maximum of the covariance values.

10. The apparatus (100) of any one of claims 7 to 9, wherein the processing circuitry (120) is configured to determine the covariance by determining a respective covariance for each of a plurality of range bins of the range representation by applying a sliding window on the plurality of range bins.

11. The apparatus (100) of any one of the previous claims, wherein the processing circuitry (120) is configured to normalize the covariance and determine the at least one of the motion and the presence of the object based on the normalized covariance.

12. The apparatus (100) of claim 11, wherein the processing circuitry (120) is configured to normalize the covariance by applying a softmax function on the covariance.

13. A radar system (1200), comprising:

the apparatus (1210) of any one of claims 1 to 12; and
the radar sensor (1220), the radar sensor (1220) being configured to emit a radio frequency signal into the field of view and measure the plurality of chirps based on a received reflection of the radio frequency signal.

14. An electronic device (1300), comprising:

the radar system (1310) of claim 13; and
control circuitry (1320) configured to control an operation of the electronic device based on the determined at least one of the motion and the presence of the object.

15. A method (1400), comprising:

determining (1410) a covariance of a plurality of chirps measured by a radar sensor; and
determining (1420) at least one of a motion and a presence of an object within a field of view of the radar sensor by applying at least one of an adaptive thresholding and a constant false alarm rate, CFAR, algorithm to the covariance.

100

130

110

120

**Fig. 1**

200

Average chirps

210-1 210-2
Chirp 1 Chirp 2

Average chirps

210-3 210-4
Chirp 3 Chirp 4

frequency

time

Chirp duration in range of 100 us

Averaged chirp duration in range of 1 ms to 100 ms relates to sensitivity

Fig. 2a

Fig. 2b

300

| | Bin 1 | Bin 2 | | | | Bin 128 |
|---|---|---|---|---|---|---|
| Chip 1 (previous meas) | | | | | | |
| Chip 2 (previous meas) | | | | | | |
| Chip 1 (current meas) | | | | | | |
| Chip 2 (current meas) | | | | | | |

310-1    310-2    ..................    310-128

**Fig. 3a**

300

| Chip 1<br>(current meas) | | | | | | |
| Chip 2<br>(current meas) | | | | | | |
| Chip 3<br>(current meas) | | | | | | |

Bin 1     Bin 2     ...........................     Bin 128

310-1     310-2                                      310-128

**Fig. 3b**

EP 4 428 565 A1

400

| | Bin 1 | Bin 2 | | | | | | | | Bin 10 |
|---|---|---|---|---|---|---|---|---|---|---|
| Chip 1 (previous meas) | 68 | 24 | 94 | 27 | 40 | 47 | 99 | 36 | 31 | 13 |
| Chip 2 (previous meas) | 72 | 93 | 84 | 37 | 12 | 7 | 64 | 47 | 86 | 83 |
| Chip 1 (current meas) | 8 | 23 | 29 | 3 | 67 | 1 | 57 | 3 | 95 | 7 |
| Chip 2 (current meas) | 10 | 40 | 9 | 88 | 73 | 68 | 11 | 69 | 24 | 90 |
| | 410-1 | 410-2 | 410-3 | 410-4 | 410-5 | 410-6 | 410-7 | 410-8 | 410-9 | 410-10 |

**Fig. 4a**

EP 4 428 565 A1

400

420

| | Bin 1 | Bin 2 | | | | | | | | Bin 10 |
|---|---|---|---|---|---|---|---|---|---|---|
| Chip 1 (previous meas) | 6 | 1 | 1 | 1 | 27 | 40 | 47 | 99 | 36 | 31 | 13 |
| Chip 2 (previous meas) | 7 | 1 | 1 | 1 | 37 | 12 | 7 | 64 | 47 | 86 | 83 |
| Chip 1 (current meas) | 8 | 1 | 1 | 1 | 3 | 67 | 1 | 57 | 3 | 95 | 7 |
| Chip 2 (current meas) | 1 | 1 | 1 | 1 | 88 | 73 | 68 | 11 | 69 | 24 | 90 |

410-1  410-2  410-3  410-4  410-5  410-6  410-7  410-8  410-9  410-10

**Fig. 4b**

EP 4 428 565 A1

400

420

| | Bin 1 | Bin 2 | | | | | | | | Bin 10 |
|---|---|---|---|---|---|---|---|---|---|---|
| Chip 1 (previous meas) | 68 | 2 | 1 | 1 | 1 | 0 | 47 | 99 | 36 | 31 | 13 |
| Chip 2 (previous meas) | 72 | 9 | 1 | 1 | 1 | 2 | 7 | 64 | 47 | 86 | 83 |
| Chip 1 (current meas) | 8 | 2 | 1 | 1 | 1 | 7 | 1 | 57 | 3 | 95 | 7 |
| Chip 2 (current meas) | 10 | 4 | 1 | 1 | 1 | 3 | 68 | 11 | 69 | 24 | 90 |

410-1  410-2  410-3  410-4  410-5  410-6  410-7  410-8  410-9  410-10

**Fig. 4c**

400

420

| | Bin 1 | Bin 2 | | | | | | | | Bin 10 |
|---|---|---|---|---|---|---|---|---|---|---|
| Chip 1 (previous meas) | 68 | 24 | 1 | 1 | 1 | 47 | 99 | 36 | 31 | 13 |
| Chip 2 (previous meas) | 72 | 93 | 1 | 1 | 1 | | 64 | 47 | 86 | 83 |
| Chip 1 (current meas) | 8 | 23 | 1 | 1 | 1 | | 57 | 3 | 95 | 7 |
| Chip 2 (current meas) | 10 | 40 | 1 | 1 | 1 | 68 | 11 | 69 | 24 | 90 |

410-1  410-2  410-3  410-4  410-5  410-6  410-7  410-8  410-9  410-10

**Fig. 4d**

Fig. 5

**Fig. 6**

EP 4 428 565 A1

Fig. 7

**Fig. 8**

Fig. 9

EP 4 428 565 A1

**Fig. 10**

Fig. 11

1200

1210

1220

Fig. 12

1300

Fig. 13

1400

receiving radar data indicating a plurality of chirps measured by a radar sensor

1410

determining a covariance of the plurality of chirps based on the radar data

1420

determining at least one of a motion and a presence of an object within a field of view of the radar sensor based on the determined covariance

1430

**Fig. 14**

Europäisches
Patentamt

European
Patent Office

Office européen
des brevets

# EUROPEAN SEARCH REPORT

**Application Number**

EP 23 16 1002

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ZHENG XINBO ET AL: "Hand gesture recognition based on range Doppler-angle trajectory and LSTM network using an MIMO radar", SPIE PROCEEDINGS; [PROCEEDINGS OF SPIE ISSN 0277-786X], SPIE, US, vol. 11384, 31 December 2019 (2019-12-31), pages 113840P-113840P, XP060126357, DOI: 10.1117/12.2558317 ISBN: 978-1-5106-3673-6 * abstract *; figure 1 * * page 2 chapter signal model first paragraph, page 5 section 3.1.1 and 3.1.3, page 6 section 3.1.4 and 3.2, page 7 section 4.1, equation 15 * | 1-15 | INV. G01S7/35 G01S13/34 G01S13/44 G01S13/58 |
| X | WO 2019/113517 A1 (TEXAS INSTRUMENTS INC [US]; TEXAS INSTRUMENTS JAPAN LTD [JP]) 13 June 2019 (2019-06-13) * paragraph [0002] * * paragraph [0003] * * paragraph [0014] * * paragraph [0016] * * paragraph [0023] * * paragraph [0029] * * paragraph [0034]; figures 1,2,5 * * paragraph [0035] * | 1-5,7,8, 11-15 | |
| A | US 2023/033166 A1 (ARAKAWA NOBUYA [JP] ET AL) 2 February 2023 (2023-02-02) * paragraph [0053] * | 10 | TECHNICAL FIELDS SEARCHED (IPC) G01S |

-/--

The present search report has been drawn up for all claims

| Place of search | Date of completion of the search | Examiner |
|---|---|---|
| Munich | 22 May 2023 | Auinger, Florian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 23 16 1002

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | KITCHEN ET AL: "A method for estimating the coefficients of a polynomial phase signal", SIGNAL PROCESSING, ELSEVIER, AMSTERDAM, NL, vol. 37, no. 3, 1 June 1994 (1994-06-01), pages 463-470, XP024231101, ISSN: 0165-1684, DOI: 10.1016/0165-1684(94)90012-4 [retrieved on 1994-06-01] * page 2 left column second paragraph * | 10 | |
| A | Iwakura Iwakura Yoshinari Yoshinari ET AL: "An Efficient Sliding Window Processing for the Covariance Matrix Estimation", https://niigata-u.repo.nii.ac.jp/record/30925/file_preview/ISAP_2008_1644889.pdf International Symposium on Antennas and Propagation, 27 October 2008 (2008-10-27), pages 1-4, XP93045945, Retrieved from the Internet: URL:https://niigata-u.repo.nii.ac.jp/record/30925/file_preview/ISAP_2008_1644889.pdf [retrieved on 2023-05-10] * the whole document * | 10 | |
| A | WO 2020/023248 A1 (QUALCOMM INC [US]) 30 January 2020 (2020-01-30) * paragraph [0152] * | 5 | |

TECHNICAL FIELDS SEARCHED (IPC)

The present search report has been drawn up for all claims

| Place of search | Date of completion of the search | Examiner |
|---|---|---|
| Munich | 22 May 2023 | Auinger, Florian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 16 1002

This annex lists the patent family members relating to the patent documents cited in the above-mentioned European search report.
The members are as contained in the European Patent Office EDP file on
The European Patent Office is in no way liable for these particulars which are merely given for the purpose of information.

22-05-2023

| Patent document cited in search report | | Publication date | Patent family member(s) | | Publication date |
|---|---|---|---|---|---|
| WO 2019113517 | A1 | 13-06-2019 | CN | 111373282 A | 03-07-2020 |
| | | | EP | 3721258 A1 | 14-10-2020 |
| | | | JP | 2021505892 A | 18-02-2021 |
| | | | US | 2019178985 A1 | 13-06-2019 |
| | | | US | 2021405150 A1 | 30-12-2021 |
| | | | WO | 2019113517 A1 | 13-06-2019 |
| US 2023033166 | A1 | 02-02-2023 | DE | 112021001047 T5 | 02-02-2023 |
| | | | JP | WO2021210480 A1 | 21-10-2021 |
| | | | US | 2023033166 A1 | 02-02-2023 |
| | | | WO | 2021210480 A1 | 21-10-2021 |
| WO 2020023248 | A1 | 30-01-2020 | CN | 112513668 A | 16-03-2021 |
| | | | EP | 3827276 A1 | 02-06-2021 |
| | | | US | 2020033442 A1 | 30-01-2020 |
| | | | WO | 2020023248 A1 | 30-01-2020 |

EPO FORM P0459

For more details about this annex : see Official Journal of the European Patent Office, No. 12/82